# EUROPEAN PATENT APPLICATION

(11) **EP 3 706 061 A1**
(43) Date of publication of application: **09.09.2020**
(21) Application number: 17930466.2
(22) Date of filing: 24.11.2017
(51) Int. Cl.: G06Q 20/40, G06Q 30/06, G06Q 20/20, G06Q 20/32, G07G 1/00, G07G 1/14

(54) **PURCHASED PRODUCT PAYMENT ASSISTANCE SYSTEM**

(30) Priority: 01.11.2017 JP 2017211954
(71) Applicant: Fujisawa, Kazunori, Tokyo 160-8486 (JP); Yodobashi Camera Co., Ltd., Tokyo 160-8486 (JP)
(72) Inventor: FUJISAWA Kazunori, Tokyo 160-8486 (JP)
(74) Representative: Grünecker Patent- und Rechtsanwälte PartG mbB
(86) International application number: PCT/JP2017/042219
(87) International publication number: WO 2019/087413

(57) **Abstract**

To provide a purchased product checkout support system that can reduce a congestion at a checkout and allow a customer to pay at their convenience. A purchased product checkout support system includes a management server that communicates with a terminal of a customer and manages purchase of a product in a store by the customer, a gate for managing entrance to and exit from the store of the customer is installed in the store, and the management server manages entrance to and exit from the store of the customer by passing through the gate, and performs a payment processing for the product carried out of the store by the customer based on reading of the product carried out of the store by the terminal of the customer after the customer exits the store by passing through the gate.

## Description

### Technical Field

The present invention relates to a checkout system that allows checkout of a product purchased at a retail store or the like, for example. In particular, it relates to a checkout support system that assists a purchaser who has purchased a product at an unattended retail store or the like to check out the product by themselves, for example.

### Background Art

Various techniques for supporting the checkout process at stores have been provided in order to reduce the congestion at the checkout, for example.

For example, a method of allowing a customer or the like to use a mobile device to purchase a product has been proposed (Patent Literature 1).

Specifically, Patent Literature 1 discloses a method of allowing purchase of a product using a mobile device, including a step of inputting identification information for identifying a product to be purchased to the mobile device, a step of creating an order for the product identified by the identification information, a step of displaying an optical machine-readable representation of the order on a display of the mobile device, a step of scanning the optical machine-readable representation of the order on the display of the mobile device with an optical scan device, a step of transmitting the scanned representation of the order to a remote server to place the order, a step of obtaining an acknowledgement of the order from the remote server using the scanned representation of the order, the order including a total payment amount, and a step of requesting a user of the mobile device to pay the total payment amount.

A hand-held terminal automatic payment system that allows a checkout to be unattended and a customer to smoothly pay without waiting in a queue has also been proposed (Patent Literature 2).

Specifically, Patent Literature 2 discloses a hand-held terminal automatic payment system including a hand-held terminal and a product comparison device, the system performing electronic payment using an IC card of a customer inserted to the hand-held terminal, wherein the hand-held terminal includes an identification information reading unit that reads product identification information assigned to a product in a non-contact manner, a card locking mechanism unit that locks the IC card to prevent the IC card from being ejected once the IC card is inserted, and a communication unit that communicates with the product comparison device, and the product comparison device includes a card unlocking unit that performs payment by the IC card when a want-to-buy list obtained by communication with the hand-held terminal and a product list obtained by reading the product identification information assigned to a product in a shopping basket or shopping card of the customer in a non-contact manner totally agree with each other, and generates a control signal to unlock the card locking mechanism unit of the hand-held terminal.

A checkout support apparatus that can notify shop clerks to behave to reduce a checkout queue of customers and can reduce unnecessary notifications by optimizing the timing of notification based on a video of the interior of the store (Patent Literature 3).

Specifically, Patent Literature 3 discloses a checkout support apparatus that supports a checkout at a store to reduce a checkout queue of customers based on a video of the interior of the store, including a checkout waiting status detection unit that detects a status of customers waiting for checkout from a video of a waiting area in which customers are waiting for checkout at a cash register, an in-store people status detection unit that detects a status of people in the store based on the video of the interior of the store, a notification determination unit that determines whether to issue a notification to a shop clerk to behave to reduce the checkout queue of customers based on a result of the detection by the checkout waiting status detection unit and a result of the detection by the in-store people status detection unit, and a notification unit that performs the notification based on a result of the determination by the notification determination unit.

### Citation List

### Patent Literature

Patent Literature 1: National Publication of International Patent Application No. 2013-541107
Patent Literature 2: Japanese Patent Laid-Open No. 2015-148846
Patent Literature 3: Japanese Patent Laid-Open No. 2015-148918

### Summary of Invention

### Technical Problem

However, with the conventional techniques disclosed in Patent Literatures 1 to 3, it is supposed that a product purchased in a store is basically paid for or checked out in the store, and the purchaser cannot pay for the product at their convenience.

In a situation where products are sold at a store, if a customer (purchaser) can freely choose products in the store and pay for the products in or outside the store at their convenience, the conventional problems of the store, such as the congestion at the checkout, can be solved, and the convenience of the customer can be improved.

### Solution to Problem

A purchased product checkout support system according to an embodiment of the present invention is a purchased product checkout support system including a management server that communicates with a terminal of a customer and manages purchase of a product in a store by the customer, wherein a gate for managing entrance to and exit from the store of the customer is installed in the store, and the management server manages entrance to and exit from the store of the customer by passing through the gate, and performs a payment processing for the product carried out of the store by the customer based on reading of the product carried out of the store by the terminal of the customer after the customer exits the store by passing through the gate.

### Advantageous Effects of Invention

With the purchased product checkout support system according to the embodiment of the present invention, the congestion at the checkout can be reduced, and the convenience of the customer can be improved since the customer can pay at their convenience, for example.

### Brief Description of Drawings

[Figure 1] Figure 1 is a diagram for illustrating the interior of an unattended store in which a purchased product checkout support system according to an embodiment of the present invention is implemented.
[Figure 2] Figure 2 is a diagram for illustrating an example of a general configuration of the purchased product checkout support system according to the embodiment of the present invention.
[Figure 3] Figure 3 is a diagram for illustrating a functional block configuration of a management server in the purchased product checkout support system according to the embodiment of the present invention.
[Figure 4] Figure 4 is a diagram for illustrating an example of an appearance of an information processing device (user terminal) in the purchased product checkout support system according to the embodiment of the present invention.
[Figure 5] Figure 5 is a diagram for illustrating a functional block configuration of hardware forming the information processing device (user terminal) according to the embodiment of the present invention.
[Figure 6] Figure 6 is a diagram for illustrating a basic flow of operations or processings performed in the purchased product checkout support system according to the embodiment of the present invention.
[Figure 7A] Figure 7A is a diagram for illustrating a flow of operations and a flow of system processings in the purchased product checkout support system according to the embodiment of the present invention.
[Figure 7B] Figure 7B is a diagram for illustrating a flow of operations and a flow of system processings in the purchased product checkout support system according to the embodiment of the present invention.
[Figure 8] Figure 8 is a diagram for illustrating an example of a window displayed on the information processing device (user or customer terminal) in the purchased product checkout support system according to the embodiment of the present invention.
[Figure 9] Figure 9 is a diagram for illustrating an example of another window displayed on the information processing device (user or customer terminal) in the purchased product checkout support system according to the embodiment of the present invention.
[Figure 10] Figure 10 is a diagram for illustrating an example of another window displayed on the information processing device (user or customer terminal) in the purchased product checkout support system according to the embodiment of the present invention.
[Figure 11] Figure 11 is a diagram for illustrating a flow of processings in the purchased product checkout support system according to the embodiment of the present invention.

### Description of Embodiments

In the following, a purchased product checkout support system according to an embodiment of the present invention will be described in detail with reference to the drawings.

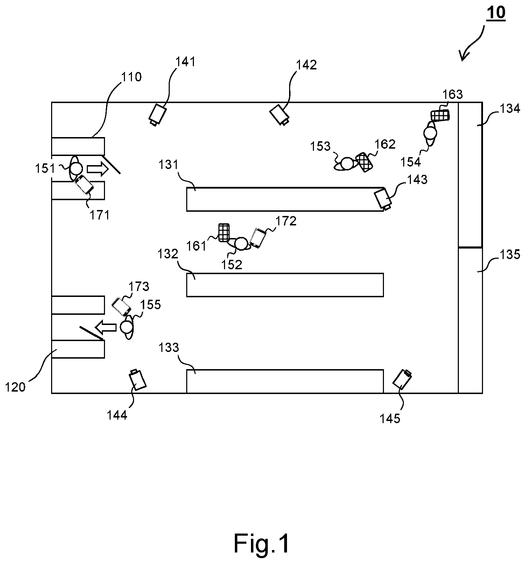

Figure 1 schematically shows the interior of a store in the purchased product checkout support system according to one embodiment of the present invention. The store does not need a salesclerk, staff or the like, so that the following description will be made on the assumption that the store is an unattended store, although the present invention is not limited to such a store (reference numerals 151 to 155 in the drawing denote customers as described later).

In the drawing, a store 10 has gates 110 and 120 at an entrance and an exit of the store, store shelves 131 to 135 (on which products (not shown) are displayed) installed in the store, and cameras 141 to 145 installed in the store (Note that the system further includes a management server or the like as described later).

The gates 110 and 120 are management gates for managing entrance and exit of customers or the like to and from the store 10.

In Figure 1, a customer 151 can enter the store 10 by holding a terminal 171 over the gate 110 at a door thereof. The customer 151 entering the store 10 is captured by a camera 141 and/or 144 installed in the store 10, for example, and a recognition process is performed as required (to determine when and what customer has entered the store, for example. More specifically, each customer, baggage or the like can be individually identified by an existing image recognition technique).

A customer 155 having finished shopping can exit the store 10 by holding a terminal 173 over the gate 120 at a door thereof. The customer 155 exiting the store 10 can be captured by the camera 141 and/or 144 installed in the store 10, and a recognition process can be also performed as required.

### [Sales Management]

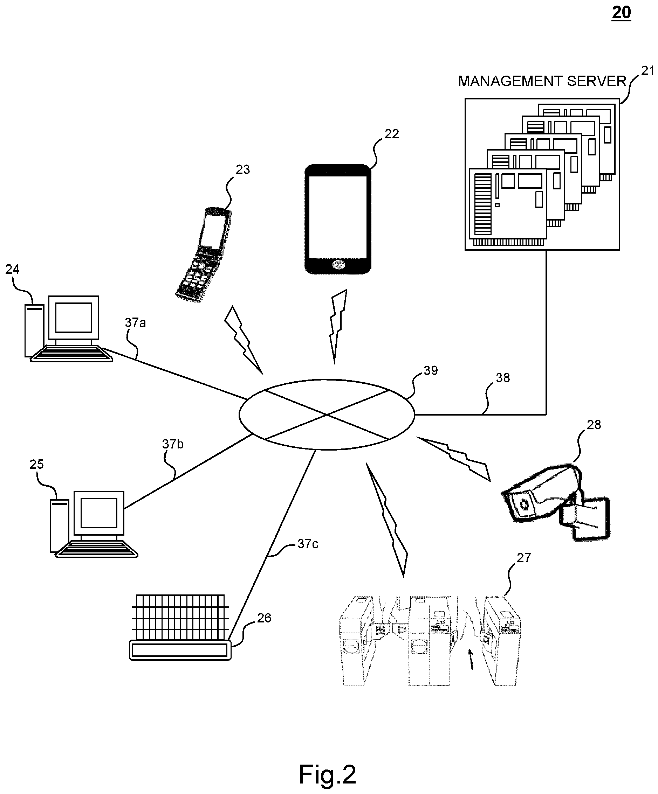

The purchased product checkout support system according to one embodiment of the present invention can also perform sales management of products or the like. The purchased product checkout support system according to one embodiment of the present invention can be associated with a POS terminal at the store or a mail-order (electronic commerce) system (not shown) and can manage the sales record of the store or the mail-order sales record on a customer basis. To this end, in one embodiment, the management server has the databases (D1) to (D5) described below, which can be referred to or accessed by various terminals described later with reference to Figure 2.

### (D1) Customer Management Database

An item of data concerning a customer is registered with a customer management database. Specifically, private information on a customer, such as name, address or telephone number, or supplementary information, such as the points on a card of the customer or a store frequently visited by the customer, is registered.

### (D2) Product Management Database

An item of data concerning a product is registered with a product management database. Specifically, a product name, a product code associated with a JAN code or the like is registered and managed.

### (D3) Stock Management Database

A stock management database is used to manage the stock of products of each of other sales locations or stores (not shown). As required, the stock management database is associated with the product management database to derive or extract a required table.

### (D4) Warehouse Management Database

A warehouse management database is used to manage the stock of products stored in a warehouse at a logistics center or the like (not shown).

### (D5) Sales Management Database

A sales management database is a record management database used to manage the record of sold products on a basis of sales location or store.

In the purchased product checkout support system according to one embodiment of the present invention, the operations or processings listed below are performed at the store 10 (the list includes operations performed by the system, a customer, a customer terminal and the like altogether). Note that the purchased product checkout support system according to one embodiment of the present invention does not have to perform all of the operations or processings listed below.
(1) Management of entrance and exit of a customer to and from the store (including identification of the customer and recording of a passage of the customer through a gate).
(2) Confirmation of a product taken out from a store shelf by a customer and confirmation of return of the taken-out product onto the store shelf.
(3) Recognition f a product in a store-designated shopping basket (such as shopping baskets 161 to 163 in Figure 1) carried by a customer.
(4) A payment procedure inside or outside the store, and management or an auxiliary process associated therewith (including a point return process).

### [Functions of Cameras 141 to 145]

In the purchased product checkout support system according to one embodiment of the present invention, the cameras 141 to 145 can be also used to identify a customer or recognize a product taken out from a store shelf by a customer, although the present invention is not limited to such an implementation. In one embodiment, a recognition program or the like used for such a purpose is stored in the management server (described later) and read and executed as required.

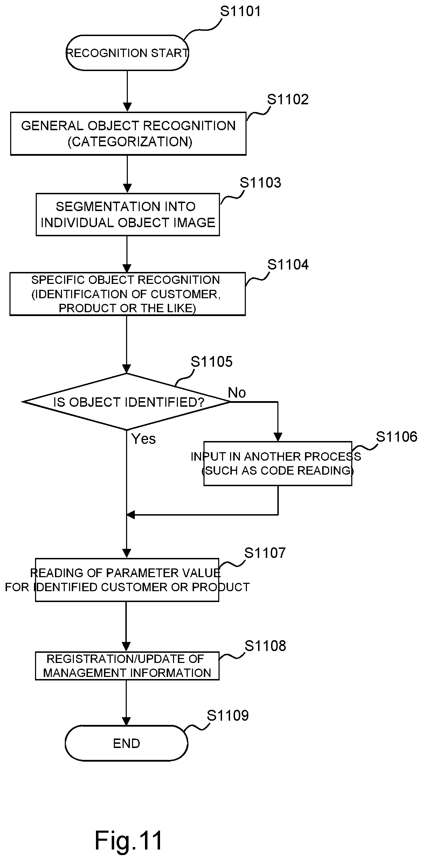

For the recognition process in this case, an existing object recognition technique can be used. Such an object recognition technique will be described below with reference to Figure 11.

Figure 11 shows an example of a detailed process flow including an object recognition process for identifying an object (such as a customer or product) from a still or moving image of a customer or product captured by any of the cameras 141 to 145 installed in the store 10 and transmitted to the management server (described later). The object recognition process can be implemented by a well-known technique. In a typical procedure, the category of a relevant object is first determined by a general object recognition process (whether the object is a human being or a product, whether the human being is male or female if the object is a human being, or what category the product belongs to if the object is a product is determined, for example), and the object is then individually identified based on the supplementary information or the like (the person is identified if the object is a customer, or the product name or the like is identified if the object is a product, for example).

In Figure 11, when the process is started in Step S1101, the process proceeds to Step S1102, in which a general object recognition process is performed for categorization, for example. As the general object recognition process, the bag-of-features (BOF) technique can be used, for example. In the general object recognition process, the category (generic name) of a detected object is recognized.

In Step S1103, segmentation into an individual object image is performed. For example, if a captured frame includes a customer standing in front of a store shelf and is taking out some product from the store shelf, objects such as "store shelf", "customer", "product (being taken out)" are recognized in the general object recognition process, and images of the "store shelf", the "customer" and the "product" in the frame are extracted as segments in this step (However, it may suffice to extract only images of the "customer" and the "product (being taken out)" as segments since what need to be recognized in this flow are the "customer" and the "product (being taken out)"). For each of the extracted individual object images of the "customer", the "product (being taken out)" and the like, a specific object recognition process is performed (S1104).

In the specific object recognition process in Step S1104, not only an image of a single object, the face of a single person or the like but also multi-layered design data on a product structure, such as CAD data, (such data is stored in a database of the management server) can be used. A feature point or feature value extracted from the image or design data is compared with feature value data generated from a scan image (which may be a still or moving image) to recognize a particular object. In general, the generation and comparison of the feature value data are achieved in one of the following two types of methods.

In a method of a first type, based on three-dimensional information on a basis of a minimum unit (represented by design data or the like) forming an object such as a product, mapped images on two-dimensional planes at various angles are generated, and a feature value or the like used for identifying the object is generated from the mapped images. For the generation of the feature value, the contour extraction method, the SIFT method, or the SURF method can be used, for example. As for the comparison described above, a feature value is extracted from the input image based on the generated feature value, and the feature values are compared with each other in location of appearance or frequency of appearance.

In a method of a second type, using a process of mapping three-dimensional shape information including a set of minimum units (such as design data) forming an object, such as a product, onto two-dimensional planes at various projection angles or enlargement ratios as an evaluation function, a difference from a feature point and a feature value of the object is determined as a degree of matching.

If the object is identified in the well-known method described above (if Yes in Step S1105), the process proceeds to Step S1107. Otherwise (if No in Step S1105), the process proceeds to Step S1106, in which another input processing based on another method, such as reading of another code (such as a product code) if the object is a product, can be performed.

In Step S1107, a parameter value (data itself that indicates the identified customer or product) corresponding to the identified customer or product is read from the database in the management server (described later).

The process then proceeds to Step S1108, in which the read parameter value is linked with the status of the customer or product. In this way, management information, such as information on which customer has taken out what product, can be registered or updated. The process then ends (in Step S1109).

Although the process has been described as ending in Step S1109, the recognition process continues as far as the system is active, of course. Therefore, management information on the status in the store, such as information that a certain customer has taken out a product and put it in the basket or what products are in the shopping basket of another customer, is constantly updated.

### [Functionality of User Terminals 171 to 173]

In one embodiment of the present invention, once an application is installed in a user terminal, the application program operates in cooperation with the management server or the like to allow the customer (user) to pay for the purchased product(s) on the user terminal whether the user is in or out of the store, as described later.

Figure 2 shows an example of a general configuration of the purchased product checkout support system according to one embodiment of the present invention.

As shown in Figure 2, a purchased product checkout support system 20 according to one embodiment includes a management server 21 and various information processing devices used by a user (customer), and a store staff member, a delivery person and other persons as required (In the drawing, a mobile information terminal or tablet terminal 22, a cellular phone 23, PCs 24 and 25 are shown for the sake of illustration. These information processing devises will be referred to also as "various terminals" or "terminals" hereinafter). As shown in Figure 2, the management server 21 and the various terminals are communicatively interconnected by a dedicated line or a public line, such as the Internet (including wired lines 37a to 39). The lines can be wired or wireless. For example, the mobile information terminal or tablet terminal 22 and the cellular phone 23 wirelessly connect to the Internet 39 via a base station, access point or the like (not shown), and is further communicatively connected to the management server 21 by a line 38.

The access point described above is radio equipment that interconnects wireless terminals, such as PCs or smartphones, or connects wireless terminals to another network. Typically, the access point is a device that operates according to the communication protocols of the first layer (physical layer) and the second layer (data link layer) of the OSI reference model.

Many of the cellular phones and the mobile information terminals or tablets at the time of filing of this application have a processing power (communication rate, image processing capability or the like) comparable to that of personal computers (PCs) and therefore can be regarded as a small-size computer.

A program or software required to implement the present invention is typically installed or stored in a hard disk drive (HDD), a solid state drive (SSD) or other memory in a storage module of a PC or mobile information terminal. To execute the program or software, a part or the whole of the program or software is loaded as a software module into the memory in the storage module as required and computationally executed by a CPU.

Alternatively, a browser-based computer or mobile information terminal may be used. In that case, a program is distributed from another server or computer to the terminal as required, and the browser on the terminal executes the program.

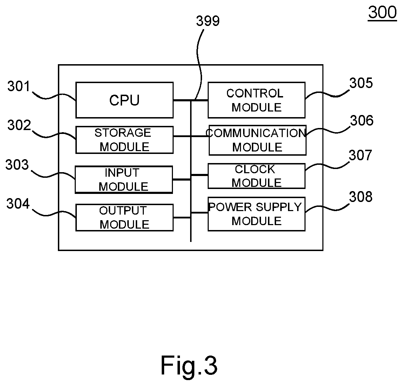

The management server 21 can also have a basically PC-based hardware configuration (such a hardware configuration will be described later with reference to Figure 3, just to be sure). Note that, as required, the management server 21 can include a plurality of PCs (such as several tens to several thousands of PCs) operating in parallel so that the hardware capacity of the management server 21 is improved and a vast amount of data can be processed, although the present invention is not limited to such a configuration.

Depending on the system configuration, part of the information processing terminals described above (the terminals 24 and 25 if the terminals 24 and 25 are store terminals, for example) can also perform a part or the whole of the functionality of the management server 21.

As described above with reference to Figure 1, the purchased product checkout support system 20 further includes a store shelf 26 installed in the store, a gate 27 for managing entrance and exit of customers, and a camera 28 for monitoring the interior of the store. In one embodiment, as shown in Figure 2, the store shelf 26 is a network-ready store shelf connected to the network by the line 37c. However, the present invention is not limited to such an implementation, and the store shelf 26 does not necessarily have to be connected to the network. Furthermore, the store shelf 26 may not be electronically controlled.

Furthermore, a plurality of store shelves 26, a plurality of gates 27, or a plurality of cameras 28 may be provided on one store (Figure 1 shows an example in which a plurality of store shelves, a plurality of gates and a plurality of cameras are provided).

Figure 3 is a functional block diagram showing the management server 21 in the purchased product checkout support system according to one embodiment of the present invention. For example, the operation of the management server is provided by operation of each piece of hardware described below and cooperation of these pieces of hardware and software.

A management server 300, which is shown as the whole of a hardware block in Figure 3, is generally formed by a CPU 301 that performs various comparisons and computations, a storage module 302 such as a RAM, a ROM or a flash memory, an input module 303 such as a keyboard or a pointing device, an output module 304 such as a display or a speaker, a control module 305 for various signal controls, a communication (interface) module 306 (which may be wired or wireless), a clock module 307 for measuring time or the like, and a power supply module 308.

These modules are appropriately connected to each other by a communication bus or a power supply line (collectively shown as a connection line 399 for the sake of convenience in Figure 3, although the line 399 actually includes a plurality of different lines) as required.

A program or software required to implement the present invention executed on the management server 300 is typically installed or stored in an HDD, an SSD, a flash memory or the like forming the storage module 302. To execute the program or software, a part or the whole of the program or software is loaded as a software module into the memory in the storage module 302 as required and computationally executed by the CPU 301.

The computational execution necessarily does not have to be performed by a central processing module such as the CPU 301, and can be performed by an auxiliary computing device, such as a digital signal processor (DSP), (not shown).

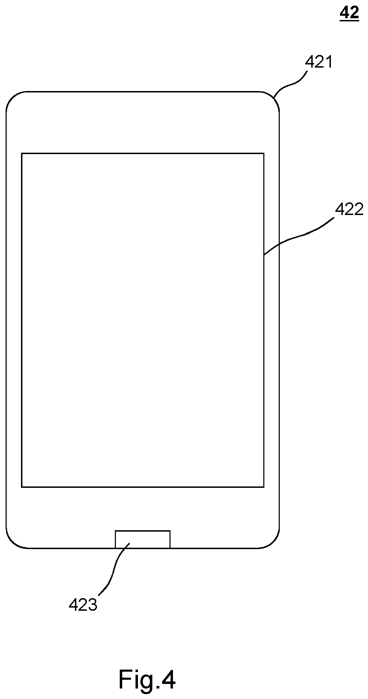

Figure 4 shows an appearance of the tablet terminal 22 as an information processing device in the purchased product checkout support system according to one embodiment of the present invention. In Figure 4, an information processing device (tablet terminal) 42 includes a housing 421, a display 422, and a hardware button 423 provided in a central part of a lower part of the housing 421. The display 422 is typically a liquid crystal display (LCD) or the like and can display various kinds of information, such as characters or a still or moving image. The display 422 can display a menu button or software keyboard, which can be touched with a finger, a stylus (not shown) or the like to input an instruction (command) to the tablet terminal 42. Therefore, the hardware button 423 described above is not an essential component. However, the hardware button 423 is provided as a button having a particular function for the convenience of explanation of the present invention. Of course, the hardware button 423 can be replaced by a menu button displayed in an area of the display 422.

The display 422 further includes a multi-touch input panel, and coordinates of the location of touch input on the touch input panel are transmitted to the processing system (CPU) of the tablet terminal 42 via an input device interface (not shown) and processed. The multi-touch input panel is configured to be capable of sensing a plurality of points of contact with the panel at the same time. The detection (sensing) can be achieved in various manners, and not only a contact sensor but also an optical sensor can be used to detect the points of contact with the panel. As an alternative to the contact sensor and the optical sensor, an electrical capacitance pressure sensor that senses contact with a human skin can also be used.

Although not shown in Figure 4, the tablet terminal 42 may further include a microphone or a speaker. In that case, a user's voice picked up by the microphone or the like can also be recognized and used as an input command. Although not shown in Figure 4, the tablet terminal 42 may also be provided with a camera device, such as a CMOS, on the back face thereof or the like.

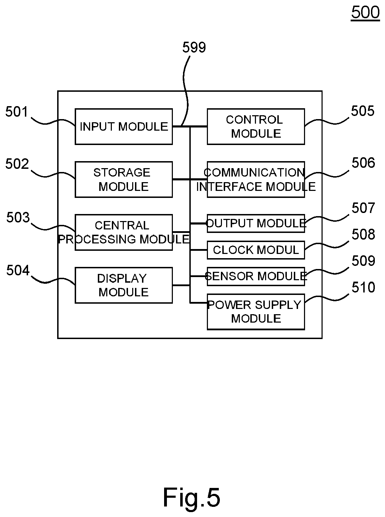

Figure 5 is a functional block diagram showing hardware forming the tablet terminal 42 according to one embodiment of the present invention. The operation of the tablet terminal 42 is provided by operation of each piece of hardware described below and cooperation of these pieces of hardware and software.

A tablet terminal 500, which is shown as the whole of a hardware block in Figure 5, is generally formed by an input module 501, a storage module 502, a central processing module 503, a display module 504, a control module 505, a communication interface module 506, an output module 507, a clock module 508, a sensor module 509, and a power supply module 510. The input module 501 includes the hardware button 423 or the multi-touch input panel provided in the display 422 shown in Figure 4 or the microphone, for example. The storage module 502 includes a hard disk, a RAM and/or a ROM for storing a program, data or the like, for example. The central processing module 503 includes a CPU that performs various numerical calculations or logical calculations according to a program. The display module 504 includes the display 422, for example. The control module 505 controls a chip or an electrical system, for example. The communication interface module 506 includes a slot for accessing the Internet, a port for optical communication, and a communication interface. The output module 507 includes a speaker, a vibrator, or an infrared projector, for example. The clock module 508 measures time, for example. The sensor module 509 includes an image sensor, such as a CMOS, an infrared sensor, or an inertial sensor, for example. The power supply module 510 supplies power to the modules in the tablet terminal 500. These modules are appropriately connected to each other by a communication bus or a power supply line (collectively shown as a connection line 599 for the sake of convenience in Figure 5, although the line 599 actually includes a plurality of different lines) as required.

Note that the sensor module 509 may include a GPS sensor module that locates the tablet terminal 500 (22). A signal from an image sensor, such as a CMOS, an infrared sensor or other sensor forming the sensor module 509 can be processed as input information by the input module 501.

A program or software required to implement the present invention executed on the tablet terminal 500 is typically installed or stored in an HDD, an SSD, a flash memory or the like forming the storage module 502. To execute the program or software, a part or the whole of the program or software is loaded as a software module into the memory in the storage module 502 as required and computationally executed by the CPU 503.

The computational execution necessarily does not have to be performed by the central processing module 503 such as the CPU, and can be performed by an auxiliary computing device, such as a digital signal processor (DSP), (not shown).

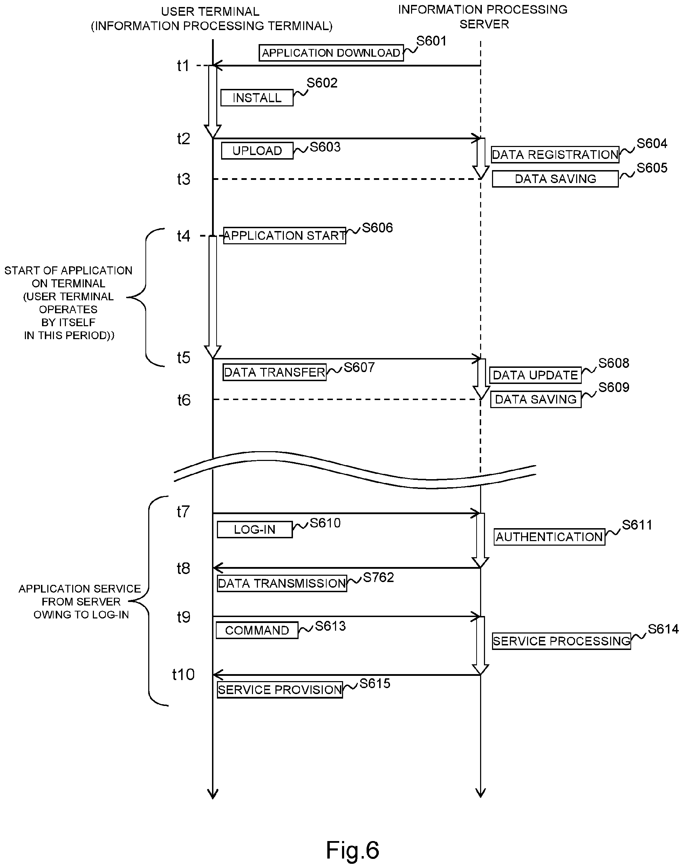

Figure 6 shows an example of a basic operation of the system, the devices and the like according to one embodiment of the present invention illustrated in Figures 1 and 2.

In Figure 6, the "user terminal" corresponds to the terminals 171 to 173 in Figure 1 and the terminal 22 in Figure 2, for example, and the "information processing server" corresponds to the management server 21 in Figure 2. In Figure 6, t1 to t10 represent a time sequence, and the operations or processes described below proceeds with time.

The operations and the points in time of processing (such as t1) in one embodiment are shown to facilitate understanding of the concept of the present invention, and the present invention is not limited to the specific time sequence illustrated in one embodiment.

At a point in time t1, the user (customer) downloads application software required to make the user terminal operate as the information processing terminal according to the present invention from the information processing server to the user terminal (Step S601). The application software is client software or application software for executing a part or the whole of the program according to the present invention. The user installs the downloaded application software in the user terminal (Step S602). At a point in time t2, the user terminal can upload the email address of the user and profile information, such as that shown in the following table as required, to the information processing server for user registration (Step S603) so that the email address and the profile information can be registered with and managed by the information processing server (Step S604).

**[Table 1]**

| | | | | | |
|---|---|---|---|---|---|
| Name (user name) | Membership number (ID) | Email address (cellular phone number) | Sex | Age (age bracket) | Place of residence (area etc.) |
| | | | | | |

The data items listed above are saved as user data in the storage device on the information processing server (Step S605). From a point in time t3 on, the user (customer) can operate the information processing terminal to start the application (the server can start providing service to the terminal).

Having downloaded the application and installed the application in the user terminal, the user then activates the application software at a point in time t4 (Step S606). For example, from the point in time t4 to a point in time t5, the user receives the service provided to the information processing terminal from the information processing server.

At the point in time t5, the user suspends or terminates the application software according to one embodiment of the present invention. At this point in time, if necessary, the user terminal transfers status information on the application to the information processing server (Step S607), and the server receives the status information, updates the user information on the user with the status information (Step S608), and saves the updated user information (Step S609). In Figure 6, these processings are completed until a point in time t6.

Alternatively, after the application software according to one embodiment of the present invention is installed in the information processing terminal, at least a part of the application software may be executed on the terminal in a closed manner. In that case, the Steps S604 to S605 and S608 to S609 described above can be omitted, and any required information is saved and managed in the memory on the terminal.

In Figure 6, points in time t7 to t10 concern an example in which at least a part of the application software according to one embodiment of the present invention is executed on the information processing server. In this case, the user (customer) performs two typical user terminal operations, that is, a log-in operation and a command transmission, and receives required data from the information processing server or receives the service provided by the information processing server.

For example, at the point in time t7 in Figure 6, the user performs a processing of logging in to the server on the information processing terminal (Step S610), and the information processing server appropriately performs a required authentication processing (Step S611). At the point in time t8, the information processing server transmits data that allows the user to receive the service provided by the information processing server (Step S612). For example, data concerning a top menu window configured to receive a command on the terminal, or data concerning an application start window is transmitted.

At the point in time t9, the user transmits some command from the information processing terminal (Step S613). The command may be a choice of a menu displayed in the menu window or a start command to start the application displayed in the application start window. In response to receiving the command, the server starts a service processing (Step S614). At the point in time t10, a service requested by the terminal is provided from the server to the terminal (Step S615).

Although not shown in Figure 6, the terminal can transmit a command (such as a message transmission command or a menu selection command) at any time even after the point in time t10, and each time the terminal transmits a command, the server can provide service in response to receiving the command (for example, the server transfers the received message to another terminal, or analyzes the message and transmits the analysis result back to the terminal).

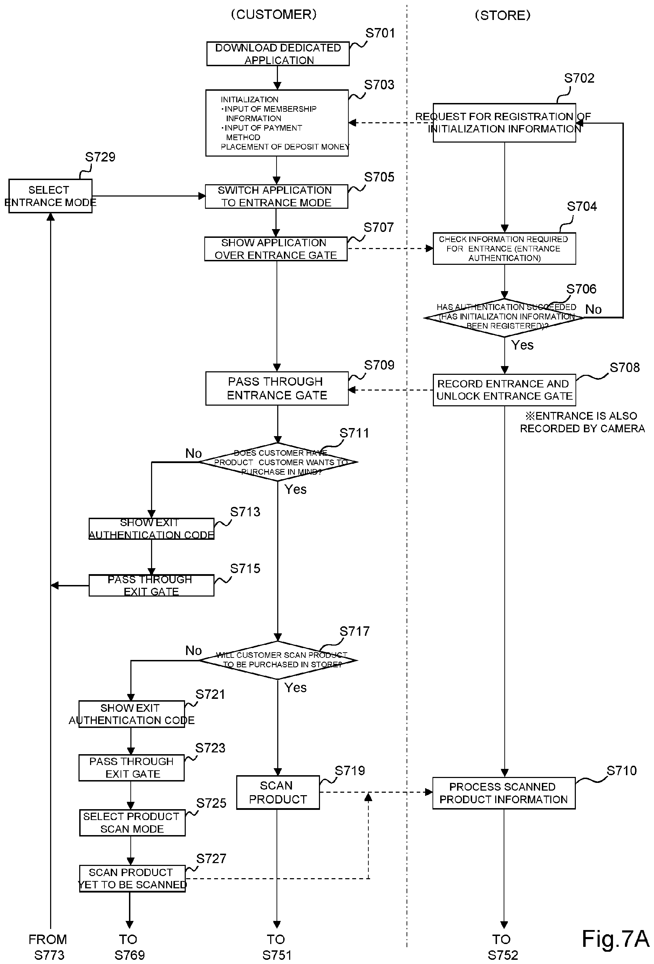

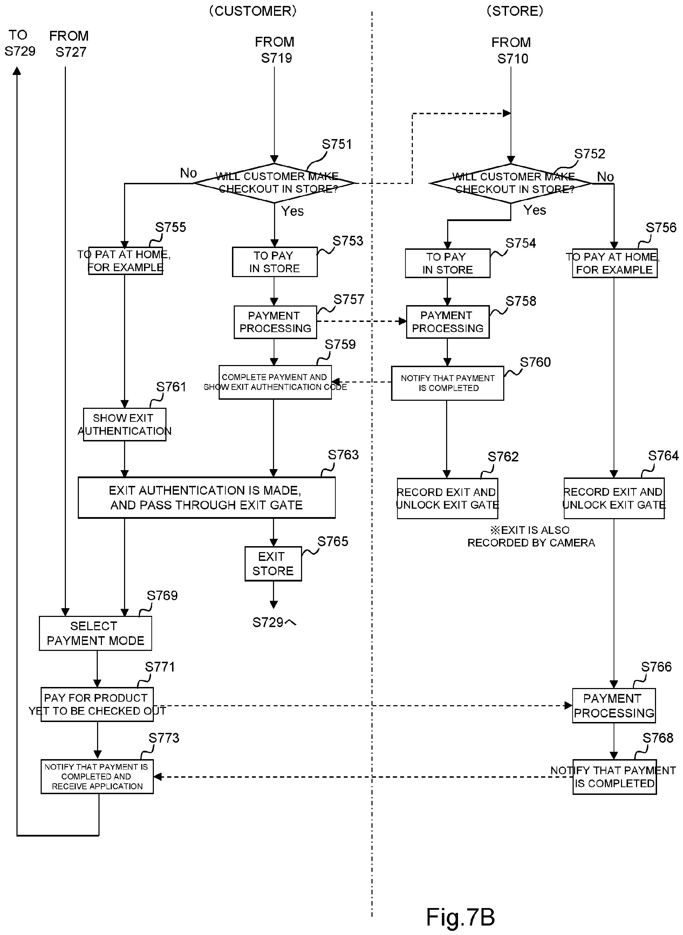

Figures 7A and 7B show a flow of operations or processings performed in the purchased product checkout support system according to one embodiment of the present invention. The operations or processings illustrated in these drawings are generally classified into operations or processings on the side of the customer (user) who is holding the customer terminal (user terminal) and operations or processings on the side of the store, such as recognition of customers or products, payment, or issue of various notifications under the control of the management server or the like.

In Step S701, the user (which is referred to also as the customer hereinafter) downloads a dedicated application to their terminal. In this regard, various scenarios are possible as described above with reference to Figure 6, and downloading a dedicated application is not essential.

In Step S702, the management server or the like on the side of the store prompts the user terminal to input or set initialization information or the like (for example, the management server makes the user terminal display a guide window or the like). In Step S703, as an operation after start of the application, the user inputs membership information or the like to the terminal (a specific example of this operation has been described above with reference to Figure 6).

According to one embodiment of the present invention, in Step S703, a payment method can be input in addition to the membership information (the payment method can be changed at any time after the initialization). In this step, a processing of placing deposit money can be performed. From the deposit money, purchase money is deducted in a payment processing according to one embodiment of the present invention.

### (Further Details about Handling of Deposit Money)

The processing of placing deposit money can be performed at any time other than the time of initialization. If no money is deposited, the system may prohibit the user to enter the store (in that case, for example, an error indication is presented at the gate door described later to deny entrance to the store). Furthermore, the deposit money may be electronic money that is valid only in the store (the electronic money can be set to be valid in all affiliated stores or only in a particular store) or information recorded in a medium for electronic payment.

According to one embodiment of the present invention, the processing of placing deposit money may be a requirement for entrance to the store.

The process then proceeds to Step S705, in which the user switches their terminal to an "entrance mode" in order to enter the store according to one embodiment of the present invention. According to one embodiment of the present invention, the application on the user terminal can be generally switched between (1) the entrance mode, (2) a product scan mode, (3) a product payment mode and (4) an exit mode, although the present invention is not limited to the implementation. The terminal application is used by switching mode depending on the scene.

According to one embodiment, once the terminal application is switched to the entrance mode, an authentication code for entrance (not shown) is displayed in a terminal application window (the authentication code for entrance is information code, such as a two-dimensional code, to be shown over the gate at the gate door. The authentication code for entrance will be referred to also as an entrance authentication code hereinafter).

In Step S707, the customer then shows the entrance authentication code displayed on the terminal over the gate 110 at the door thereof. According to one embodiment of the present invention, the code is optically read by the gate 110 and is transmitted to the management server 21 or a terminal in the store (not shown) to perform an authentication processing for the customer (Step S704). Alternatively, in Step S704, information required for entrance to the store may be checked.

The process then proceeds to Step S706, in which it is determined whether the authentication has succeeded (or the initialization information on the customer has already been registered).

If the result of the determination in Step S706 is No, the process returns to Step S702, and at this point in time, the user terminal may request the user to register the initialization information or the like. If the result of the determination in Step S706 is Yes, the process proceeds to Step S708, in which the door (check door, for example) of the gate 110 is opened. Then, the customer getting through the door (or entering the store) is recorded in the management server 21. According to one embodiment of the present invention, the customer entering the store is also recorded by a camera through human recognition or the like.

In Step S709, the customer gets through the door of the entrance gate 110.

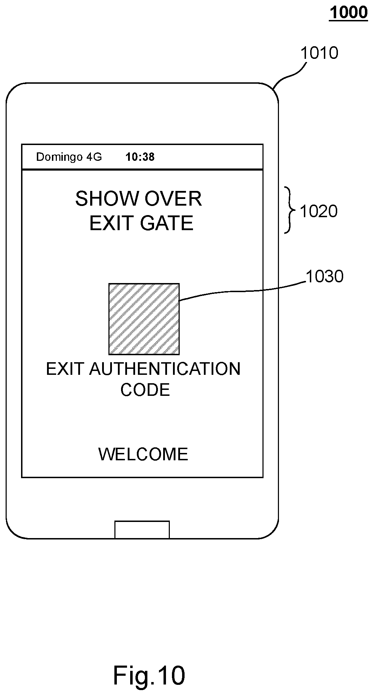

The process then proceeds to Step S711, at which the process divide depending on whether or not the customer has some product the customer wants to purchase in mind. If it is determined in Step S711 that the customer has some product the customer wants to purchase in mind (if Yes), the process proceeds to Step S717. Otherwise (if No), the process proceeds to Step S713. In Step S713, the customer switches their terminal to the exit mode and shows an exit authentication code (which is a form of exit code that permits the customer to exit the store through a pickup area) over the gate 120 at the gate door. According to one embodiment of the present invention, the code is optically read at the gate 120 and transmitted to the management server 21. An example of the exit authentication code displayed is shown in Figure 10. Figure 10 shows an example of a window displayed on a user terminal 1000, and a guide message 1020 and an exit authentication code 1030 are shown on a display 1010 of the terminal 1000. The exit authentication code 1030 may be a known two-dimensional code.

The process then proceeds to Step S715, in which the door (check door, for example) of the gate 120 is opened. Then, the customer getting through the door is recorded in the management server 21. According to one embodiment of the present invention, the customer exiting the store is also recorded by a camera through human recognition or the like.

In Step S715, the customer gets through the door of the exit gate 120.

Although the entrance authentication code and the exit authentication code have been described as being known two-dimensional codes and optically read, this is intended to facilitate understanding of the present invention, and the present invention is not limited to the implementation. For example, the codes may be magnetically read, or an authentication method based on a known near-field radio communication technology may be used (The same holds true for the following description).

At Step S717, the process divides depending on whether the customer will scan a product the customer wants to purchase (a product put in the shopping basket in a specific example) in the store. If Yes in Step S717, the process proceeds to Step S719, and if No in Step S717, the process proceeds to Step S721.

The present invention is characterized in that whether to scan a product in the store or not is not synonymous with whether to make a payment in the store or not described later, and the scan and the payment are independent from each other.

According to one embodiment of the present invention, if Yes in Step S717 (that is, if a product is scanned in the store in the subsequent Steps S719 and S710), the scan can be managed by setting a flag indicating an in-store scan in a table (not shown) in the management server or the like, for example.

In Step S721, the customer switches the terminal to the exit mode and shows the exit authentication code over the gate 120 at the door thereof. The code is read at the gate 120 and transmitted to the management server 21. An example of the exit authentication code displayed is shown in Figure 10. The process then proceeds to Step S723, in which the door (check door, for example) of the gate 120 is opened. Then, the customer getting through the door is recorded in the management server 21. According to one embodiment of the present invention, the customer exiting the store is also recorded by a camera through human recognition or the like.

In Step S725, the customer switches the terminal to "the product scan mode". The process then proceeds to Step S727, in which the customer scans any product yet to be scanned. The scan in this step is a processing of reading or recognizing product information for identifying the product. In one embodiment, a product tag or a product code printed on the package of a product can be read or scanned by the object recognition described above with reference to Figure 11.

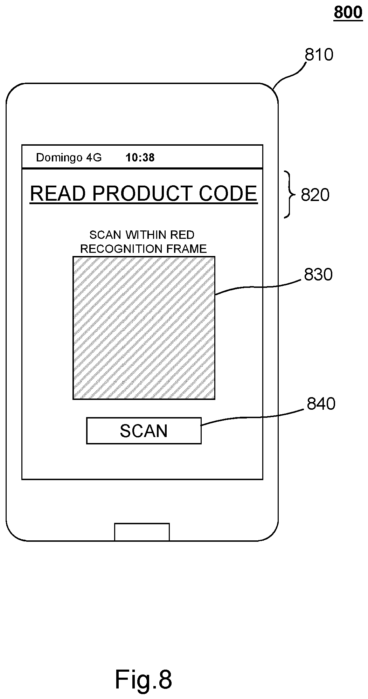

Figure 8 shows an example of a window displayed on the user terminal when reading a product tag or reading a product code printed on the package of a product. Figure 8 shows an example of a window displayed on a user terminal 800, and a guide message 820, an image recognition frame 830 for a product code or the like, and a scan start button 840 are shown on a display 810 of the terminal 800. The user takes a picture of the product code printed on the package or the like of the product within the frame 830 with the camera in the terminal, and the terminal recognizes the product code with a recognition function (not shown) (in this operation, a red frame can be displayed along the edge of the recognized product code according to one embodiment). The user then presses the scan start button 840 to perform a reading processing.

Of course, the same interface can also be used when the object recognition processing described above with reference to Figure 11 is performed.

The product information scanned as describe above is recorded and managed in the management server or the like in Step S710. Once Step S727 is completed, the process proceeds to Step S769.

On the other hand, in Step S719 (if Yes in Step S717), the scan processing is performed in the store, and the scanned product information is recorded and managed in the management server or the like in Step S710.

Figure 7B shows a flow of operations or processings following the flow shown in Figure 7A. The operations or processings will be described as being performed by the cooperation of the customer and the store, in order that the checkout/payment processing can be more clearly described later. That is, for example, the determinations in Steps S751 and S752 are not independently made by the customer terminal and the server in the store but are made by the cooperation of the customer terminal and the server in the store (if the result in Step S751 is Yes, the result in Step S752 is also Yes, and if the result in Step S751 is No, the result in Step S752 is also No). As other examples, Steps S753 and S754 are associated with each other, and Steps S755 and S756 are associated with each other.

At Step S751 (Step S752), the process divides depending on whether the customer wants check out in the store or not. If Yes in Step S751 (Step S752), the process proceeds to Step S753 (Step S754). If No in Step S751 (S752), the process proceeds to Step S755 (Step S756).

In Step S753, in order to perform the payment processing in the store, the user terminal is switched to the product payment mode (in Step S754, a preparation is made to receive a payment processing request as required). In Step S757, the user terminal issues a payment processing request to the management server or the like. In response to this, in Step S758, the management server or the like performs the payment processing. In Step S760, the management server or the like then issues a payment completion notification. In Step S759, the user terminal receives the payment completion notification, and displays the exit authentication code on the terminal screen as required.

On the other hand, in Step S755 (if No in Step S751), since the user has decided to pay at home (outside the store), the user terminal transmits an outside payment notification to the management server or the like in one embodiment (in an different embodiment, the user terminal may not transmit the outside payment notification). In Step S756, the management server or the like receives the notification and records that the user who has transmitted the notification will pay outside the store (in a different embodiment, the management server or the like can also be configured not to receive the outside payment notification).

When the management server or the like receives and records the outside payment notification in Step S756, clock means (not shown) may start measuring time (in order to measure the time since the user has issued the outside payment notification).

The time measurement can be started in Step S761, S763 or S764, instead of Step S755 or S756.

In Step S761, the user terminal is switched to the exit mode, and the window illustrated in Figure 10 described above is displayed on the user terminal screen, for example.

In Step S763, the user having chosen any checkout (payment) method is subjected to the exit authentication at the door of the gate and passes through the gate. In the corresponding Steps S762 and S764, the management server or the like records the exit of the user, and unlocks (or opens) the door of the gate. In one embodiment of the present invention, the exit of the user can also be recorded by a camera through human recognition or the like.

In Step S765 (in the case where the payment is completed in the store), the flow of shopping ends. If the user does their shopping in the store according to one embodiment again, the process returns to Step S729.

In the case where the outside payment is chosen, in Step S769, the user switches the terminal to the product payment mode in order to pay outside the store for the products the user has taken out of the store.

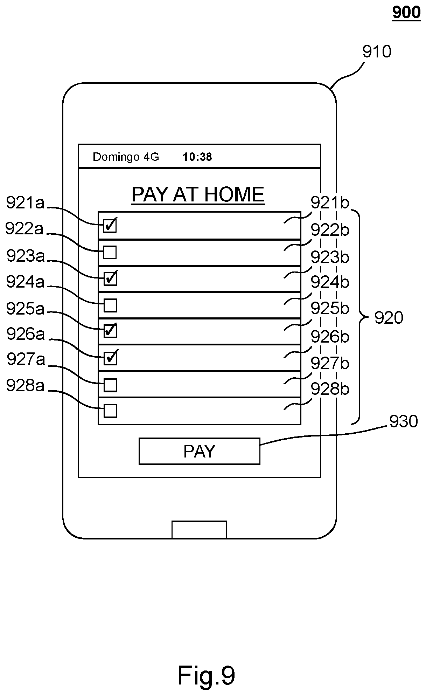

The process then proceeds to Step S771, in which any product yet to be checked out is paid for. An example of a user terminal screen when the outside payment is made is shown in Figure 9. Figure 9 shows an example of a window displayed on a user terminal 900, and a heading "home payment" (a heading "outside payment" or the like may be displayed in a different embodiment), a list 920 of fields of products to be paid for and checkboxes, and a payment button 930 are shown on a display 910 of the terminal 900.

The list 920 of product fields and checkboxes includes checkboxes 921a to 928a and corresponding product fields 921b to 928b. From the products to be paid for, the user selects a product the user wants to immediately pay for (in the drawing, checkboxes 921a, 923a, 925a and 926a are checked, for example). Then, in response to the user pressing the payment button 930, the window transitions to a payment window (not shown) to start the payment, for example.

According to one embodiment of the present invention, the payment processing is performed by the management server (Step S766). Once the payment processing is completed, the management server transmits a payment completion notification (Step S768), and the user terminal receives the payment completion notification (Step S773).

This is the end of the flow of shopping. If the user does their shopping in the store according to one embodiment again, the process returns to Step S729.

### [Modification of Product Scan]

The product scan described above is performed mainly by the user terminal. However, the present invention is not limited to such an implementation, and the product scan may be performed by the cameras (the cameras 141 to 145 in Figure 1 and the camera 28 in Figure 2) installed in the store, instead of the user terminal or in addition to the user terminal. In that case, according to one embodiment of the present invention, when the customer (individually identified) picks up and puts a particular product in the shopping basket, the product is recognized as a product to be paid for by the management server or the like. If the customer changes their mind and puts the product in the shopping basket back to the store shelf (or a shelf for returned products (not shown)), the product is individually recognized, and the product is deleted from the list of products to be paid for the customer, and the list is updated. These processings are performed substantially in real time.

### [Self-Declaration-Based Operation by Customers]

In another embodiment of the present invention, whether a customer has left the store carrying a product or not may be checked based on self-declaration by the customer (by the ex post outside payment). In that case, again, the interior of the store is monitored by the monitor cameras (although it is not necessarily required to identify the product carried out, and the system is not necessarily required to automatically individually identify the customer as far as the customer can be identified from the video taken by the camera). Thus, any customer can be kept track of who is determined to have left the store obviously carrying a product from the entrance and exit records in the application in the terminal and the video taken by the monitor camera but has neither declared that fact nor paid for the product.

In another embodiment of the present invention, the deposit money of the customer who has neither declared nor paid can be reclaimed (forfeited) (In an embodiment, any customer who has no deposit money is rejected for entrance, so that at least the deposit money can be reclaimed).

In another embodiment of the present invention, the management procedure may be also followed in which the customer who has neither declared nor paid may be first reminded (alerted), and then if the customer does not pay in spite of that, the deposit money of the customer may be forfeited.

Furthermore, the customer who has neither declared nor paid can be added to a blacklist of customers (not shown) in the management server. The customers in the blacklist are managed by the management server, and any customer in the blacklist is rejected for entrance to the store.

An example of a system management control flow in the case where "the self-declaration-based operation by customers" described above is performed is as follows.
(S1) A customer exits the store carrying a product but does not declare or pay within a predetermined time since the exit (such as 6 hours, 12 hours or 24 hours since the exit). (to Step S2)
(S2) The store performs a reminder processing targeted at the customer terminal one or more times. The reminder processing is preferably performed using the application on the customer terminal, although the present invention is not limited to the implementation. For example, the reminder processing may be performed using email, another chat application or telephone, for example.
(S3) In spite of the Step (S2) described above, the customer does not declare or pay (or the customer neither declares nor pays). (to Step S4)
(S4) The deposit money of the customer is reclaimed (forfeited). Alternatively, the deposit account may be frozen. (to Step S5)
(S5) The customer is added to the blacklist of customers. Furthermore, if the customer visits the store, the customer can be rejected for entrance based on the blacklist of customers.

The purchased product checkout support system and the components thereof according to an embodiment have been described above with regard to specific examples. The present invention can be embodied as a method or a program for implementing a system or a device or a recording medium in which the program is recorded (such as an optical disk, a magneto-optical disk, a CD-ROM, a CD-R, a CD-RW, a magnetic tape, a hard disk or a memory card), for example.

The implementation of the program is not limited to an application program, such as an object code compiled by a compiler or a program code executed by an interpreter, and may be a program module or the like incorporated in an operating system.

Furthermore, the program does not need to be totally executed by a CPU on a control board, but a part or the whole of the program may be executed by another processing unit (such as a DSP) implemented in an expansion board or expansion unit added to the board as required.

The components described in this specification (including Claims, Abstract and the drawings) and/or the steps of the method or process disclosed in this specification can be used in any combination, as far as the features are not incompatible with each other.

Each of the features described in this specification (including Claims, Abstract and the drawings) can be replaced with a substitute feature that serves the same, compatible or similar purpose, unless explicitly described otherwise. Therefore, each of the features disclosed is only an example of a comprehensive group of same or similar features, unless explicitly described otherwise.

Furthermore, the present invention is not limited to any of the specific configurations in the embodiment described above. The present invention can be expanded to all the novel features described in this specification (including Claims, Abstract and the drawings) or all combinations thereof, or steps of all the novel methods or all the novel processes described in this specification (including Claims, Abstract and the drawings) or all combinations thereof.

### Reference Signs List

10 store
110, 120, 27 gate
131-135, 26 store shelf
141-145, 28 camera
20 purchased product checkout support system
21 management server
22 tablet terminal (a form of user terminal device)
23 cellular phone (a form of user terminal device) 24-25 PC (a form of user terminal device and/or terminal in store)
37a-37c, 38 communication line
39 public line (such as dedicated line or the Internet)

## Claims

1. A purchased product checkout support system comprising a management server that communicates with a terminal of a customer and manages purchase of a product in a store by the customer,
wherein a gate for managing entrance to and exit from the store of the customer is installed in the store, and
the management server
manages entrance to and exit from the store of the customer by passing through the gate, and
performs a payment processing for the product carried out of the store by the customer based on reading of the product carried out of the store by the terminal of the customer after the customer exits the store by passing through the gate.

2. The purchased product checkout support system according to Claim 1, wherein the terminal of the customer at least has a product scan mode and a product payment mode for performing a product payment processing after a product scan processing in the product scan mode, and the product scan processing in the product scan mode and the product payment processing in the product payment mode are independently performed in or outside the store.

3. The purchased product checkout support system according to Claim 1 or 2, wherein the store further includes a camera, and
the management server recognizes and manages the entrance to and exit from the store of the customer using the camera.

4. The purchased product checkout support system according to any one of Claims 1 to 3, wherein the management server manages deposit money placed by the customer via the terminal of the customer, and performs at least one of:
(A) denying entrance to the store if there is no deposit money placed by the customer;
(B) performing a reminder processing of reminding the customer after a lapse of a predetermined time if the customer exits the store without performing the payment;
(C) adding the customer to a blacklist if the customer does not declare or perform a payment processing even after the (B); and
(D) reclaiming the deposit money of the customer in addition to the (C).

5. A program that is executed on a purchased product checkout support system comprising a management server that communicates with a terminal of a customer and manages purchase of a product in a store by the customer,
wherein a gate for managing entrance to and exit from the store of the customer is installed in the store, and
the program makes the management server perform
a step of managing entrance to and exit from the store of the customer by passing through the gate, and
a step of performing a payment processing for the product carried out of the store by the customer based on reading of the product carried out of the store by the terminal of the customer after the customer exits the store by passing through the gate.

6. The program according to Claim 5, wherein the terminal of the customer at least has a product scan mode and a product payment mode for performing a product payment processing after a product scan processing in the product scan mode, and the product scan processing in the product scan mode and the product payment processing in the product payment mode are independently performed in or outside the store.

7. The program according to Claim 5 or 6, wherein the store further includes a camera, and
the program makes the management server recognize and manage the entrance to and exit from the store of the customer using the camera.

8. The program according to any one of Claims 5 to 7, wherein the program makes the management server perform a step of managing deposit money placed by the customer via the terminal of the customer, and perform at least one of:
(A) a step of denying entrance to the store if there is no deposit money placed by the customer;
(B) a step of performing a reminder processing of reminding the customer after a lapse of a predetermined time if the customer exits the store without performing the payment;
(C) a step of adding the customer to a blacklist if the customer does not declare or perform a payment processing even after the step (B); and
(D) a step of reclaiming the deposit money of the customer in addition to performing the step (C).
